(19) **Europäisches Patentamt**
**European Patent Office**
**Office européen des brevets**

(11) **EP 2 935 112 B1**

(12) **EUROPEAN PATENT SPECIFICATION**

(45) Date of publication and mention
of the grant of the patent:
**04.04.2018 Bulletin 2018/14**

(51) Int Cl.:
*C01C 3/02* *(2006.01)*    *B01D 53/26* *(2006.01)*
*F26B 21/08* *(2006.01)*

(21) Application number: **13812443.3**

(86) International application number:
**PCT/US2013/074729**

(22) Date of filing: **12.12.2013**

(87) International publication number:
**WO 2014/099622 (26.06.2014 Gazette 2014/26)**

(54) **APPARATUS AND METHOD FOR DECREASING HUMIDITY DURING AN ANDRUSSOW PROCESS**

VORRICHTUNG UND VERFAHREN ZUR FEUCHTIGKEITSREDUZIERUNG WÄHREND EINES ANDRUSSOW-VERFAHRENS

APPAREIL ET PROCÉDÉ POUR RÉDUIRE L'HUMIDITÉ PENDANT UN PROCÉDÉ D'ANDRUSSOV

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.12.2012  US 201261738708 P**

(43) Date of publication of application:
**28.10.2015  Bulletin 2015/44**

(73) Proprietor: **INVISTA Textiles (U.K.) Limited
Manchester M2 3DE (GB)**

(72) Inventors:
 • **FORSYTH, Stewart
Wilmington, DE 19808 (US)**

 • **LIU, Aiguo
Elk Grove Village, IL 60007 (US)**
 • **RENNER, Martin, J.
Hallettsville, TX 77964 (US)**
 • **STAHLMAN, Brent, J.
Victoria, TX 77901 (US)**

(74) Representative: **Carpmaels & Ransford LLP
One Southampton Row
London WC1B 5HA (GB)**

(56) References cited:
**WO-A1-00/68143    GB-A- 1 202 787
US-A- 2 057 282    US-A1- 2010 086 468**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

The present disclosure is directed to humidity control for the Andrussow process for the production of hydrogen cyanide (HCN) from methane, ammonia, and oxygen.

### BACKGROUND

Andrussow processes typically convert ammonia and methane gas into hydrogen cyanide (HCN) in the presence of oxygen and a platinum-containing catalyst. The reaction is as follows:

$$2NH_3 + 2CH_4 + 3O_2 \rightarrow 2HCN + 6H_2O$$

In addition to hydrogen cyanide, the reactor off-gas contains a variety of side products and unreacted input gases.
Because water is generated during the reaction, and therefore is present within the reactor, one might expect that addition of small amounts of water to the reactants would have little effect. However, during an Andrussow process optimal $NH_3/O_2$ and $CH_4/O_2$ ratios are maintained to insure that the reaction proceeds efficiently. Such an efficient reaction not only helps to avoid production of high levels of side products, but also avoids imbalances in the gas mixture that could lead to detonation. When the water content of input gases varies, such control is compromised. Unexpected changes in the water content of the methane or oxygen sources can unexpectedly change the flow rate of these gases, leading to modified $NH_3/O_2$ and $CH_4/O_2$ ratios, with the associated inefficiencies and potentially problematic gas ratios. Decreased efficiency, decreased capacity, and/or decreased yield can result. For example, when the water content of air fed into an Andrussow reactor varies, the volume of oxygen varies slightly, albeit by a small percentage. Some estimates indicate that reduction in humidity, or at least consistent humidity levels, in the gas mixture can improve HCN output by up to 5%.
Various aspects of HCN production are described in the following articles: Eric. L. Crump, U.S. Environmental Protection Agency, Office of Air Quality Planning and Standards, Economic Impact Analysis For the Proposed Cyanide Manufacturing NESHAP (May 2000), available online at http://nepis.epa.gov/Exe/ZyPDF.cgi?Dockey=P100AHG1.PDF, is directed toward the manufacture, end uses, and economic impacts of HCN; N.V. Trusov, Effect of Sulfur Compounds and Higher Homologues of Methane on Hydrogen Cyanide Production by the Andrussow Method, Rus. J. of Applied Chemistry, Vol. 74, No. 10, pp. 1693-97 (2001), is directed toward the effects of unavoidable components of natural gas, such as sulfur and higher homologues of methane, on the production of HCN by the Andrussow process; Clean Development Mechanism (CDM) Executive Board, United Nations Framework Convention on Climate Change (UNFCCC), Clean Development Mechanism Project Design Document Form (CDMPDD), Ver. 3, (Jul. 28, 2006), available online at http://cdm.unfccc.int/Reference/PDDs_Forms/PDDs/PDD_form04_v03_2.pdf, is directed toward the production of HCN by the Andrussow process; and Gary R. Maxwell et al., Assuring process safety in the transfer of hydrogen cyanide manufacturing technology, J. of Hazardous Materials, Vol. 142, pp. 677-84 (2007), is directed toward the safe production of HCN.

### SUMMARY

The problems associated with reactant gases having excessive and/or variable water content during Andrussow processes can be solved by regulating the humidity of at least one of the reactant gaseous feedstream(s) prior to entry into an Andrussow reactor. At least some of the problems relate to unpredicted changes in the reactant gas ratios as described above, and to variation in the energy needed to heat the gas mixture to reaction temperatures. Even small changes in water content have surprisingly large effects. Water has a greater heat capacity than air, methane and ammonia. Therefore more energy is needed to heat water than that would be needed to heat an equivalent volume of air, methane or ammonia. When some of the input gases have high humidity, more energy is needed to heat the entire gas mixture to temperatures appropriate for the Andrussow process. While the energy needs might be adapted to accommodate a predicted change in reactant gas humidity, unexpected changes can lead to unexpected changes in reactor temperatures. Such fluctuation in reactor temperature reduces the efficiency of conversion, leading to reduced HCN production and a propensity for side product formation. Moreover, the temperature fluctuation can be localized, leading to hot and cold spots. When a hot spot occurs in the catalyst material, the catalysts can be weakened and have reduced catalyst efficacy in that spot. Over time, such inconsistencies can reduce the life of the catalyst, lead to more frequent reactor shutdowns for cleaning and parts replacement. Hence, small but unpredictable amounts of water in reactant gases can have surprisingly large effects upon the efficiencies, product yields and costs associated with Andrussow processes (e.g., the yield of HCN can change by 1-2% when the water content in air is changed causing the

$NH_3/O_2$ and $CH_4/O_2$ ratios to change as little as 0.003% by volume.

The present invention provides a process for generating hydrogen cyanide comprising:

a) regulating water content in at least one gaseous feedstock to generate one or more feedstreams selected from the group consisting of a methane consistent water content feedstream, an ammonia consistent water content feedstream, and an oxygen-containing consistent water content feedstream; and
b) reacting a methane feedstream, an ammonia feedstream and an oxygen feedstream to thereby generate hydrogen cyanide,

wherein at least one of the methane feedstream, the ammonia feedstream or the oxygen feedstream is a consistent water content feedstream, and
wherein the consistent water content feedstream varies in water content by not more than about 1% (w/w) from a set value.

The present invention also provides a system comprising:

a) a reactor configured for reaction of methane, ammonia and oxygen in the presence of a platinum-containing catalyst; and
b) at least one humidity regulator operably linked to the reactor and configured to regulate water content in at least one gaseous feedstock to generate one or more feedstreams selected from the group consisting of a methane consistent water content feedstream, an ammonia consistent water content feedstream, and an oxygen-containing consistent water content feedstream;

wherein at least one of the methane feedstream, the ammonia feedstream or the oxygen feedstream is a consistent water content feedstream, and
wherein the at least one humidity regulator is configured to generate a consistent water content feedstream that varies in water content by not more than about 1% (w/w) from a set value.

## DESCRIPTION OF THE FIGURES

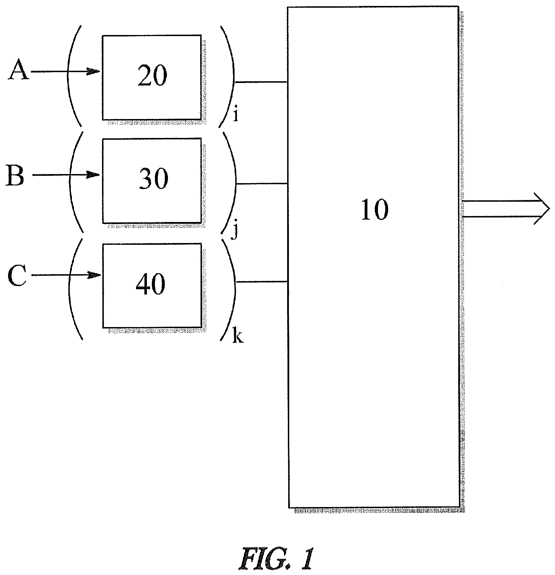

FIG. 1 illustrates an example of a system for an Andrussow process that includes one or more humidity regulating units operably linked to an Andrussow reactor. The humidity regulating units can regulate water content in a reactant feedstock gas (A, B, or C) before entry into an Andrussow reactor.

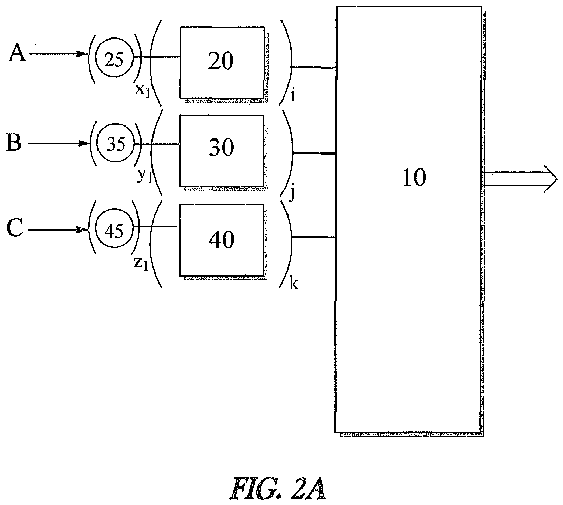

FIG. 2A-2D illustrate exemplary systems for Andrussow processes that include one or more humidity regulating units that are operably linked to an Andrussow reactor. The humidity regulating units can regulate moisture content in reactant feedstock gases A, B, or C. The reactant feedstock gases can pass through a detector before entry into humidity regulating unit.

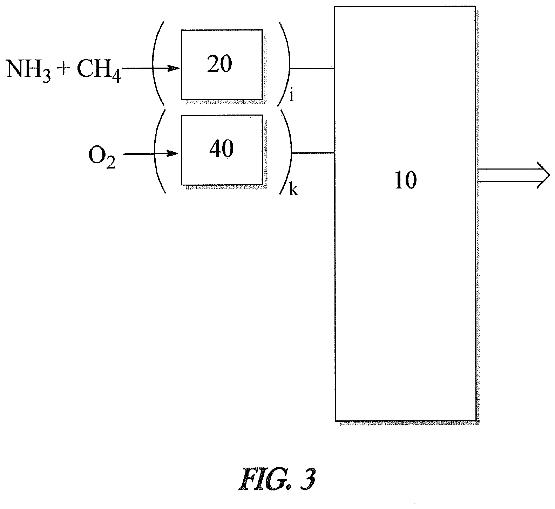

FIG. 3 illustrates an example of a system for an Andrussow process that includes one or more humidity regulating units that are operably linked to an Andrussow reactor. The humidity regulating units can regulate moisture content in reactant feedstock gas A (e.g., an oxygen-containing feedstock) or a combination of feedstock gases B and C (e.g., a combination of ammonia- and methane-containing feedstocks).

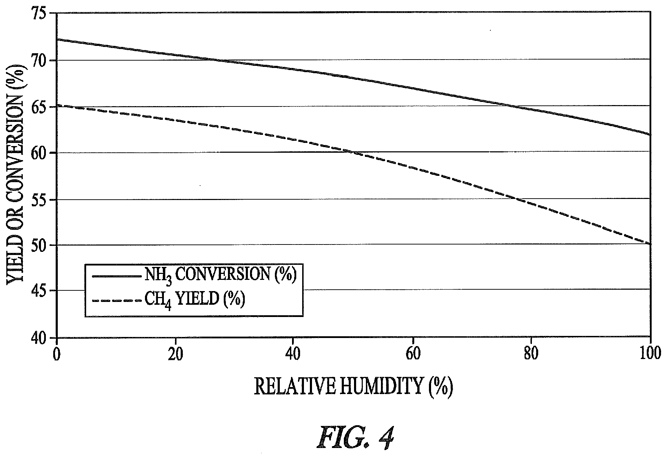

FIG. 4 graphically illustrates how the percent conversion of ammonia into HCN ($NH_3$ conversion, lower line) and the percent conversion of methane into HCN ($CH_4$ yield, high line) correlates with the relative humidity of the oxygen-containing feedstream (e.g. air).

## DETAILED DESCRIPTION

As described herein problems associated with variable humidity (or water content) levels in reactant gas feedstocks used for an Andrussow are solved by incorporating one or more humidity regulating units into an Andrussow process or manufacturing system. The humidity regulating units can regulate moisture content in reactant feedstock gases to generate gaseous reactant feedstreams with consistent water content acceptable for use in an Andrussow reactor.

## Reactant Gas Feedstocks and Feedstreams

As indicated above, an Andrussow reaction proceeds as follows:

$$2NH_3 + 2CH_4 + 3O_2 \rightarrow 2HCN + 6H_2O$$

The reactant gas feedstreams are therefore a gaseous ammonia feedstream, a gaseous methane feedstream and a gaseous oxygen feedstream.

As used herein, a gaseous "feedstream" is a reactant gas that has a consistent water content acceptable for feeding into an Andrussow reactor. The term "feedstock" is a gaseous source of gaseous feedstream that can contain impurities such as water. When the feedstock becomes a feedstream, no further purification or modulation of water content is needed. Although a feedstock, as purchased, can be sufficiently pure to become a feedstream, testing can be required to establish the acceptability of the feedstock as a feedstream.

As used herein, a methane consistent water content feedstream refers to a methane feedstream having a substantially consistent water content.

As used herein, an ammonia consistent water content feedstream refers to an ammonia feedstream having a substantially consistent water content.

As used herein, an oxygen-containing consistent water content feedstream refers to an oxygen-containing feedstream having a substantially consistent water content.

As described herein, the water content of at least one feedstock is modulated by a humidity regulator. In some cases, the water content of at least two feedstocks is modulated by a humidity regulator. In other cases, the water content of all three feedstocks is modulated by a humidity regulator. As indicated below, feedstock streams can be combined, but control of the composition of a feedstock can be facilitated if the feedstocks are separately stored and/or handled.

One or more of these reactant gas feedstocks can be filtered to remove particulate matter prior to entry into a humidity regulator or use as a feedstream in a reactor. For example, one or more gas feedstocks can be filtered prior to adjustment of humidity levels. The filter can remove particles of at least about 0.1 microns in diameter, or at least about 0.3 microns in diameter, or at least about 0.5 microns in diameter, or at least about 1 micron in diameter, or at least about 2 microns in diameter, or at least about 5 microns in diameter, or at least about 10 microns in diameter.

Such a feedstock filter can be made from a variety of materials. For example, filter materials can be woven, non-woven, particulate, can have a variety of pore sizes, and the number of pores per unit area or unit volume of the filter material can vary, for example, with the volume of air to be passed through the filter.

The reactant gas feedstreams need not be 100% pure because the Andrussow reaction can proceed with some other gases present.

For example, the oxygen feedstream can be air, air enriched with oxygen, or a mixture of oxygen with non-reactive gases such as nitrogen or argon. As used herein, an air Andrussow process uses air as the oxygen feedstock, and such an air (oxygen) feedstock has approximately 20.95 mol% oxygen.

An oxygen-enriched Andrussow process uses an oxygen-containing feedstock having about 21 mol% oxygen to about 26%, 27%, 28%, 29%, or to about 30 mol% oxygen, such as about 22 mol% oxygen, 23%, 24%, or about 25 mol% oxygen. Air can form the remainder of the oxygen-enriched feedstock.

An oxygen Andrussow process is different from an air or oxygen-enriched Andrussow process in that the oxygen Andrussow process uses an oxygen-containing feedstock having about 26 mol% oxygen, 27%, 28%, 29%, or about 30 mol% oxygen to about 100 mol% oxygen. An oxygen Andrussow process can use an oxygen-containing feedstock having about 35 mol% oxygen, 40%, 45%, 50%, 55%, 60%, 65%, 70%, 75%, 80%, 85%, 90%, 95%, or about 100 mol% oxygen.

An oxygen-containing feedstock having less than 100 mol% oxygen, can be generated by mixing air with oxygen, by mixing oxygen with any suitable gas or combination of gases, or by removing one or more gases from an oxygen-containing gas composition such as air.

There are some advantages to the use of an oxygen-enriched or oxygen Andrussow process instead of an air Andrussow process. Advantageously, by using an oxygen-enriched or oxygen Andrussow process, a greater proportion of hydrogen can be generated in the effluent stream than in an air Andrussow process. Also, in an oxygen-enriched or oxygen Andrussow process, less non-reactive or impurity materials are present in the oxygen-containing feed stream, which reduces heating costs of the desired reagents prior to adding to a reactor, resulting in less wasted energy. The equipment for production of an equivalent amount of HCN can also be more compact (smaller) for an oxygen-enriched or oxygen Andrussow process than for an air Andrussow process.

However, an oxygen-enriched Andrussow process or an oxygen Andrussow process can have a number of problems that are not experienced in an air Andrussow process. Moreover, as the oxygen concentration of the feed gas increases, the problems are amplified. For example, the reagents in an oxygen-enriched or oxygen Andrussow process are less diluted by other gases, such as inert gases. Therefore, an oxygen-enriched or oxygen Andrussow process tends to proceed in a more concentrated fashion than an air Andrussow process. As such, an oxygen-enriched or oxygen Andrussow process tends to generate a higher concentration of all products, including by-products. Hence, the reactor and associated equipment for an oxygen-enriched or oxygen Andrussow process is more susceptible to the build-up of impurities in the system that can more easily be flushed out of the equipment employed in an air Andrussow process. The greater rate of by-product build-up can lead to increased rates of corrosion as well as more frequent shut down and maintenance of various parts of the process. Equipment that can be significantly affected by by-product build-up, corrosion and related problems include, for example, the reactor(s), the ammonia recovery system(s), and the HCN recovery system(s). Because the reagents in an oxygen-enriched or oxygen Andrussow process are more concentrated, the reaction can be more sensitive to variations in concentration of reagents than in an air Andrussow process. Local variations in the concentration of reagents as the reagents travel past the catalyst can cause temperature variations in the catalyst bed, such as hot spots, which can reduce the life of the catalyst as compared to an air Andrussow process, and can also require additional safety controls to avoid problems of ignition or detonation. Also, heat transfer from the effluent of an oxygen-enriched or oxygen Andrussow process can be more difficult than in an air Andrussow process, in part because the effluent is more concentrated than observed for an air Andrussow process and cooling such a concentrated effluent to the point of condensation can increase the likelihood of side product formation that might not be observed if the effluent was more dilute. In addition, variations in the concentration or flow rate of reagents in an oxygen-enriched or oxygen Andrussow process can cause larger differences in the overall efficiency of the process as compared to an air Andrussow process. In an oxygen-enriched or oxygen Andrussow process, added safety control features are often used that may not be needed in an air Andrussow process to avoid combustion or detonation of the gas mixture. An oxygen-enriched or oxygen Andrussow process is more sensitive to changes in heat (e.g., BTU) value of the feed gas; therefore, small variations in the composition of the feed stream can cause greater temperature fluctuations in the reactor than would be observed for similar feed stream compositions in an air Andrussow process. The present invention can provide solutions to these problems.

An oxygen feedstock can have some organic material, but only small amounts. For example, an oxygen feedstock can have less than 1.0% organic material, or less than 0.5% organic material, or less than 0.3% organic material, or less than 0.1% organic material. Such organic material can include carbon dioxide, carbon monoxide, methane, alkanes containing 1-4 carbons, and the like.

The methane feedstream can include some impurities, for example, a low percentage of carbon dioxide, nitrogen, oxygen, alkanes with 1-4 carbon atoms, and combinations thereof. However, use of methane feedstreams with significant percentages of impurities can lead to carbon build-up of the platinum-containing catalyst. Even low percentages of higher hydrocarbons, for example, where the methane feedstream has less than about 96% methane and there is up to about 4% higher hydrocarbon, can lead to some carbon build-up, which reduces HCN yields and, if continued, actual physical disintegration of catalyst structures. Although minor carbon build up occurs with pure methane feedstreams, such build up is relatively slow, yields and conversions decrease only moderately, and the catalyst can last for several months.

For example, the methane feedstream should not contain more than about 2% vol/vol alkanes (other than methane), and/or not more than about 2% vol/vol carbon dioxide, and/or not more than 2% vol/vol of hydrogen sulfide, and/or not more than about 3% vol/vol nitrogen, and/or not more than about 3% vol/vol water. For example, the methane feedstream should not contain more than about 2 wt%, or no more than about 1 wt%, or no more than about 0.1 wt%, of ethane, or of propane, or of alkene analogs thereof, or of a mixture thereof. Impurities can be removed from methane feedstocks by available procedures.

Substantially pure methane is generally available, in which case there may be no need to regulate the humidity of the methane feedstock because it is already a feedstream suitable for reaction during an Andrussow process. Such substantially pure methane can, for example, be a mixture comprising methane of at least about 95% methane purity, or of at least about 99% methane purity, or of at least about 99.9% methane purity. A purified methane feedstream may be desirable that has less than 100 ppm impurities, or even less than 10 ppm impurities.

Occasions may arise when substantially pure methane supplies are unavailable, or where methane costs are sufficiently expensive that use of an impure methane feedstock is attractive. For example, the methane can be supplied from natural gas, bio-methane (from anaerobic fermentation), synthesized methane, or other sources of methane that can contain $C_2$, $C_3$, and higher hydrocarbons (e.g., ethane, ethene, propane, propene, cyclopropane, butane, butene, isobutane, etc.). In such situations, a methane feedstock can be subjected to purification steps and/or to regulation of humidity levels. For example, impurities such as higher hydrocarbons can be removed by using a cryogenic process, a reduction process to convert carbon dioxide or carbon monoxide to methane, a desulfurization process to remove sulphur contaminants and combinations thereof. Some of these processes are typically employed after removal of at least some water content, such as the cryogenic process. Alternatively, the process to remove impurities (e.g., cryogenic purification) can yield a methane feedstream with significantly reduced water content. Hence, pre-purification of a methane feedstock to remove contaminants can involve reduction of the water content to a consistent humidity level that can be as low as about 100 ppm or between about 5 ppm to about 100 ppm. In these cases a methane feedstock need not be subject to additional regulation of its water content.

The ammonia feedstock need not be 100% pure ammonia. Instead, the ammonia feedstock can contain some moisture and/or trace amounts air or oxygen. Such trace amounts include up to but not more than about 5% by volume, or not more than about 3% by volume, or not more than about 2%, or not more than about 1% by volume of the total gas composition. However, significant percentages of oxygen and/or water can cause problems such as formation of ammonia hydroxide that can be corrosive to parts of the reactor or pre-treatment equipment. Thus, if high levels of oxygen are present, the ammonia feedstock can be treated to reduce the total content of oxygen to less than about 2% by volume, or less than about 1% by volume, or less than about 0.5% by volume, or less than about 0.1% by volume. In the case of water, the ammonia feedstream can contain up to about 5% by volume steam, or up to about 2% by volume, or up to about 1% by volume steam, or up to about 0.5% by volume steam mixed with the ammonia. The ammonia feedstream can also be 98%, 99%, 99.5% or 100% ammonia.

Some of the feedstocks or feedstreams can be combined prior to entry into the reactor. For example, the ammonia and methane feedstocks or feedstreams can be combined. However, it can be simpler to handle the feedstocks separately because the types and amounts of undesired impurities, including water, may differ from one batch of feedstock to the next. Hence, although the methane and ammonia feedstreams can be merged once it is established that these feedstreams have an acceptable purity and a consistent water content, the feedstocks (prior to purification and/or regulation of water content) can be stored and processed separately. Providing separate feedstreams to the reactor via separate inlets allows gas mixtures within the reactor to quickly be varied.

The synthesis of hydrogen cyanide by the Andrussow method (see, for example, Ullmann's Encyclopedia of Industrial Chemistry, Volume 8, VCH Verlagsgesellschaft, Weinheim, 1987, pp. 161-162) can be carried out in the vapor phase over a catalyst that comprises platinum or platinum alloys, or other metals. Catalysts suitable for carrying out the Andrussow process were discovered and have been described in the original Andrussow patent, published as U.S. Pat. No. 1,934,838, and elsewhere. In Andrussow's original work, he disclosed that catalysts can be chosen from oxidation catalysts that are infusible (solid) at the working temperature of around 1000°C. For example, Andrussow describes catalysts that can include platinum, iridium, rhodium, palladium, osmium, gold or silver as catalytically active metals either in pure form or as alloys. He also noted that certain base metals, such as rare earth metals, thorium, uranium, and others, could also be used, such as in the form of infusible oxides or phosphates, and that catalysts could either be formed into nets (screens), or deposited on thermally-resistant solid supports such as silica or alumina.

In subsequent development work, platinum-containing catalysts have been selected due to their efficacy and to the heat resistance of the metal even in gauze or net form. For example, a platinum-rhodium alloy can be used as the catalyst, which can be in the form of a metal gauze or screen such as a woven or knitted gauze sheet, or can be disposed on a support structure. In an example, the woven or knitted gauze sheet can form a mesh-like structure having a size from 20-80 mesh, e.g., having openings with a size from about 0.18 mm to about 0.85 mm. A catalyst can comprise from about 85 wt% to about 95 wt% Pt and from about 5 wt% to about 15 wt% Rh, such as 85/15 Pt/Rh, 90/10, or 95/5 Pt/Rh. A platinum-rhodium catalyst can also comprise small amounts of metal impurities, such as iron (Fe), palladium (Pd), iridium (Ir), ruthenium (Ru), and other metals. The impurity metals can be present in trace amounts, such as about 10 ppm or less.

Further information on the Andrussow method is described in German Patent 549,055. In one example, a catalyst comprising a plurality of fine-mesh gauzes of Pt with 10% rhodium disposed in series is used at temperatures of about 800 to 2,500° C, 1,000 to 1,500° C, or about 980 to 1050° C. For example, the catalyst can be a commercially-available catalyst, such as a Pt-Rh catalyst gauze available from Johnson Matthey Plc, London, UK, or a Pt-Rh catalyst gauze available from Heraeus Precious Metals GmbH & Co., Hanau, Germany.

**Humidity**

There are three major types of humidity measurements: absolute, relative and specific. Absolute humidity is the water content of air, usually expressed as a percentage. Relative humidity, also expressed as a percentage, measures the current absolute humidity relative to the maximum. The term that is typically used in daily life is the relative humidity. Specific humidity is a ratio of the water vapor content of the mixture to the total air content on a mass basis.

Absolute humidity is an amount of water vapor, usually discussed per unit volume. The mass of water vapor, $m_w$, per unit volume of total air and water vapor mixture, $V_{net}$, can be expressed as follows:

$$AH = \frac{m_w}{V_{net}}.$$

Absolute humidity in air ranges from zero to roughly 30 grams per cubic meter when the air is saturated at 30 °C.

Relative humidity is the amount of water vapor in a mixture of atmospheric air and water vapor. It is defined as the ratio of the partial pressure of water vapor in an air-water mixture to the saturated vapor pressure of water at a prescribed temperature. The relative humidity of air depends not only on temperature but also on the pressure of the system of interest. Relative humidity in the atmosphere can vary from 50% to greater than 90%, but the absolute water content is depend on temperature. For example, air at atmospheric pressure with 100% relative humidity contains about 8% water (wt/wt) at 50 °C, about 2.66 % water (wt/wt) at 30 °C, about 1.97 % water (wt/wt) at 25 °C. As described herein, detectors can be used to monitor the humidity or water vapor content of gaseous feedstocks and initiate humidity regulation as desired.

Humidity varies throughout the day. By way of example, the average daily high temperature in Houston, Texas during the summer peaks at 94 °F (34 °C) at the end of July, and an average of 99 days per year have temperatures above 90 °F (32 °C). In Houston, Texas, the average relative humidity during the summer ranges from over 90 percent in the morning to around 60 percent in the afternoon. In Reno, Nevada, the average temperature in July is about 71.6°F (22 °C), and the relative humidity varies from about 60 percent in the morning to about 18 percent in the afternoon. Hence, the relative humidity can vary throughout the day, no matter whether an Andrussow process is performed in a comparatively humid climate or in a comparatively dry climate.

Specific humidity is the mass of water per unit mass of moist air (or equivalently in the same volume). Specific humidity ratio is expressed as a ratio of water vapour mass, $m_v$, per air mass, $m_a$. That ratio is defined as:

$$SH = \frac{m_v}{m_a}.$$

As used herein, values for humidity are specific humidity values expressed as water weight percentage or water volume percentage of a gaseous feedstream.

As described above, the content of water in a gaseous feedstock open to the atmosphere varies with the temperature and pressure of the feedstream. Air typically would be the only feedstock that may be open to the atmosphere. Use of specific humidity values provides a precise measure of water content in such a feedstream and if relative humidity is measured the values obtained can be converted into specific humidity values.

The heat capacity (specific heat) of air varies with its water content. For example, the heat capacity of humid air is greater than the heat capacity of dry air. Hence, humid air can absorb more heat than dry air. Consequently, humid air requires more energy to heat it to temperatures useful for an Andrussow process than does dry air.

For illustration, common properties for air at atmospheric pressure are shown in the Table 1 below.

**Table 1**

| Temperature -t-(°C) | Density -ρ-(kg/m³) | Specific heat capacity -$c_p$- (kJ/kg.K) | Thermal conductivity -l-(W/m.K) | Kinematic viscosity -v-(m²/s) | Expansion coefficient -b-x 10⁻³ (1/K) | Prandtl's number -$P_r$- |
|---|---|---|---|---|---|---|
| -150 | 2.793 | 1.026 | 0.0116 | 3.08 | 8.21 | 0.76 |
| -100 | 1.980 | 1.009 | 0.0160 | 5.95 | 5.82 | 0.74 |
| -50 | 1.534 | 1.005 | 0.0204 | 9.55 | 4.51 | 0.725 |
| 0 | 1.293 | 1.005 | 0.0243 | 13.30 | 3.67 | 0.715 |
| 20 | 1.205 | 1.005 | 0.0257 | 15.11 | 3.43 | 0.713 |
| 40 | 1.127 | 1.005 | 0.0271 | 16.97 | 3.20 | 0.711 |
| 60 | 1.067 | 1.009 | 0.0285 | 18.90 | 3.00 | 0.709 |
| 80 | 1.000 | 1.009 | 0.0299 | 20.94 | 2.83 | 0.708 |
| 100 | 0.946 | 1.009 | 0.0314 | 23.06 | 2.68 | 0.703 |
| 120 | 0.898 | 1.013 | 0.0328 | 25.23 | 2.55 | 0.70 |
| 140 | 0.854 | 1.013 | 0.0343 | 27.55 | 2.43 | 0.695 |
| 160 | 0.815 | 1.017 | 0.0358 | 29.85 | 2.32 | 0.69 |
| 180 | 0.779 | 1.022 | 0.0372 | 32.29 | 2.21 | 0.69 |
| 200 | 0.746 | 1.026 | 0.0386 | 34.63 | 2.11 | 0.685 |
| 250 | 0.675 | 1.034 | 0.0421 | 41.17 | 1.91 | 0.68 |
| 300 | 0.616 | 1.047 | 0.0454 | 47.85 | 1.75 | 0.68 |
| 350 | 0.566 | 1.055 | 0.0485 | 55.05 | 1.61 | 0.68 |
| 400 | 0.524 | 1.068 | 0.0515 | 62.53 | 1.49 | 0.68 |

As described herein, the water content in one or more reactant gas feedstreams is regulated to maintain consistency in the percent by weight or the percent by volume of water over time. Such consistency allows more precise control, for example, of reactant gas mixtures and reactor temperatures over time, which avoids problems such as uneven flow of feedstreams, by-product formation, inadequate mixing, hot and cold spots in the reactor (e.g., in the catalyst bed), and the like.

**Humidity Regulators**

A humidity regulator can increase or decrease the water content of reactant feedstock gases in order to maintain a consistent water content in feedstock gases over time. A decision to increase or decrease the water content of reactant feedstock gases can be made depending upon the composition of a feedstock, the costs of regulating the water content of feedstock, the costs associated with use of one or more feedstocks having inconsistent water content, and the like. For example, the costs associated with use of one or more feedstocks having inconsistent water content can include costs relating to lower HCN production, costs relating to more frequent catalyst replacement, costs relating to equipment cleaning, increased feedstock costs due to inefficient conversion to HCN, costs relating to enhanced safety precautions, costs associated with increased energy usage, and the like.

The consistency in water content can be maintained until the economics of the manufacturing process, the Andrussow equipment, and/or the feedstock purities warrant a change. For example, the consistency in water content of one or more feedstocks can be maintained for about 12 hours, for about 1 day, for about 2 days, for about 3 days, for about 4 days, for about 1 week, for about 2 weeks, for about 1 month, for about 2 months, for a season (e.g., spring, summer, fall, or winter), for about 1 year, for about 3 years, and for any other selected time period.

Any convenient humidity regulator can be employed so long as the humidity regulator can be configured to supply an output gaseous feedstream with consistent water content over time.

For example, consistent water contents can be achieved in gaseous feedstreams simply by bubbling the feedstocks through substantially pure water. Such a process can saturate the resulting feedstream with water, and so long as the feedstream is maintained at a constant temperature (at least until enclosed within the Andrussow system), it will have a substantially consistent water content. The water content of a feedstock can also be increased by addition of controlled amounts of steam, or water vaporized by a variety of methods such as by misting, spraying, atomization, ultrasonic vibration and combinations thereof.

The water used for humidification can be filtered to remove particulates, and/or purified to remove contaminates. Processes for purifying water for humidification can include distillation, deionization, filtration through carbon, reverse osmosis, microporous filtration, ultrafiltration, ultraviolet oxidation, electrodialysis and combinations thereof.

However, because the heat capacity of water is greater than any of the reactant gases, it can be desirable to reduce the water content of reactant feedstreams that contain significant water, which has the benefit of reducing energy costs for heating these feedstreams. Therefore, a manufacturer can elect to avoid water saturated feedstreams and may not choose a method that involves saturating feedstocks with water.

A consistent water content in a feedstream need not be 100 percent consistent. The water content in a feedstream in the present invention varies by no more than about about 1% (wt/wt), or less than about 0.9%, or less than about 0.8%, less than about 0.7% (wt/wt), or less than about 0.6%, or less than about 0.5%, less than about 0.4% (wt/wt), or less than about 0.3%, or less than about 0.2%, less than about 0.1% (wt/wt), or less than about 0.09%, or less than about 0.08%, less than about 0.07% (wt/wt), or less than about 0.06%, or less than about 0.05% from the set value. In general, the smaller the variation, the more optimal and predictable are the conditions in the Andrussow reaction and HCN production.

The Andrussow reactor and process can operate more efficiently when the reduced amounts of water are present in the reactant gases. For example, the Andrussow process will operate more efficiently when the humidity regulators can yield reactant gas feedstreams with less than about 1% water by volume (or less than about 0.6% water by weight), or with less than about 0.9% water by volume (or less than about 0.54% water by weight), or with less than about 0.85% water by volume (or less than about 0.51% water by weight), or with less than about 0.75% water by volume (or less than about 0.45% water by weight), or with less than about 0.6% water by volume (or less than about 0.36% water by weight), or with less than about 0.5% water by volume (or less than about 0.3% water by weight), or with less than about 0.4% water by volume (or less than about 0.24% water by weight), or with less than about 0.3% water by volume (or less than about 0.18% water by weight), or with less than about 0.2% water by volume (or less than about 0.12% water by weight), or with less than about 0.1% water by volume (or less than about 0.06% water by weight).

For example, when atmospheric air is used as an oxygen-containing feedstream, the air feedstream can have less than about 0.85% by volume, which is equal to saturation level of water in air at 5 °C. However, when air or oxygen-enriched air is used as an oxygen feedstock, it may advantageous to employ feedstreams with less than about 0.75% water by volume (or less than about 0.45% water by weight), or with less than about 0.6% water by volume (or less than about 0.36% water by weight), or with less than about 0.5% water by volume (or less than about 0.3% water by weight), or with less than about 0.4% water by volume (or less than about 0.24% water by weight), or with less than about 0.3% water by volume (or less than about 0.18% water by weight), or with less than about 0.2% water by volume (or less than about 0.12% water by weight), or with less than about 0.1% water by volume (or less than about 0.06% water by weight).

A humidity regulator can include various components, including chambers, pumps, detectors, condensers, refrigerating systems, heating systems, adsorbents, absorbents, purging systems, feedback controllers, and the like. The selection of components for use in a humidity regulator can vary depending upon the volume of feedstock gas to be regulated, the expected water composition and type of the feedstock, the variation in water content that can be tolerated, and the like.

Condensers equipped to condense and chill a feedstock gas can often handle large volumes of feedstock gases, and may be an attractive component of a humidity regulator. Adsorbent materials can also be employed, either in conjunction with, or without, a condenser unit.

Condensers can expose moist gaseous feedstocks to one or more cold dehumidifying surfaces. The surfaces of the condenser can be chilled by a refrigerating unit. Moisture condenses out of the gaseous feedstock onto the one or more surfaces and can drain from the surfaces, for example, into a container. The gaseous feedstock can be chilled at increased pressure or simply chilled at atmospheric pressure. For example, the gaseous feedstream can be subjected to pressure swings to facilitate moisture removal. Alternatively, the condenser can increase the pressure within a chilled chamber containing the gaseous feedstream, moisture can be removed, and the pressure of the gaseous feedstream can be adjusted to feed the feedstream into an Andrussow reactor at an appropriate rate.

The condensation surface of condensation devices can be cooled in a variety of ways. Liquid cooled condensers can remove excess moisture from feedstock gases by circulating cool liquid through a system of coils, pipes or other closed systems that provide an exterior surface for water condensation. Alternatively, a cool gas (e.g., a refrigerant gas) can be circulated through a system of coils, pipes or other closed systems that provide an exterior surface for water condensation. Thus, a humidity regulator can include a refrigerant dryer that cools a compressed gas below ambient temperature so that moisture in the compressed gas condenses on refrigerated surfaces. Refrigerant dryers have the advantage of being able to continually remove moisture from the gas. However, refrigerant dryers can utilize large quantities of energy, and treatment of gases to achieve low humidity levels can be difficult or expensive.

Adsorbent materials can be employed in humidity regulators to absorb moisture or materials that act as molecular sieves. The absorbent materials can be in dry form or in liquid form. For example, some dehumidifiers have dry absorbents such as silica, lithium chloride, $H_2SO_4$, or CaO, whereas liquid absorbent devices can use substances such as lithium chloride solutions to remove moisture from air. Industrial dehumidifiers can include solid desiccant rotors, for example, ceramic wheels or disks that are covered with a desiccant such as silica, and chemicals such as lithium chloride, sulfuric acid ($H_2SO_4$), or calcium oxide (CaO). The desiccant rotor can rotate through a dehumidifying chamber where a feedstream gas is exposed to desiccant. A desiccant rotor can rotate through the chamber and out into a regenerating environment where the adsorbed moisture is removed.

A "molecular sieve" is a material containing pores of a precise and uniform size that can adsorb components of gases and liquids. Molecular sieves are different from common filters in that molecular sieves operate on a molecular level. Molecular sieves can allow molecules small enough to pass through the pores to be adsorbed while larger molecules are not. For instance, a water molecule may be small enough to pass through while larger molecules are not. Because of this, molecular sieves can function as desiccants. Some molecular sieves can adsorb water up to 22% of its own weight. Molecular sieves often consist of alumino-silicate minerals, clays, porous glasses, micro-porous charcoals, zeolites, active carbons, or synthetic compounds that have open structures through which small molecules, such as nitrogen, methane, and water can diffuse. For example, molecular sieves useful for removing water from gaseous feedstocks can be made from alkali alumino-silicates, containing silicon dioxide and aluminium dioxide.

One type of molecular sieve that can be used for absorbing water vapor is a 4A molecular sieve, which has a pore size of 4 angstroms. Any molecule larger than 4 angstroms will generally not be adsorbed. Adsorption by 4A molecular sieves is generally better and more commonly used than some other types of molecular sieves or adsorbents because 4A molecular sieves use little energy and have no significant detrimental effects on gaseous feedstocks. The 4A molecular sieve can be obtained from a variety of suppliers, such as Delta Adsorbents (see, e.g., website at deltaadsorbents.com) or Texas Technologies Inc. (see, e.g., website at texastechnologies.com).

Methods for regeneration of absorbent materials, desiccants and molecular sieves include use of pressure changes, heat, and purging with a carrier gas. Electric or gas-fired heaters can be used remove absorbed water condensate from a desiccant. Other removal methods include steam and positive temperature coefficient heaters, as well as self-regulating devices. For example, molecular sieves can be regenerated using temperatures such as about 204 °C to 316°C (400° to 600°F) ; in general, regeneration temperatures should not exceed 538°C (1000°F).

For example, the humidity regulator can include a desiccant dryer that has a desiccant container to hold a hydroscopic agent, such as silica gel, calcium oxide or sulfuric acid. The gaseous feedstock can be pumped through the container to expose the gas to the hydroscopic agent, which has affinity for water. Moisture within the feedstock can be adsorbed into the hydroscopic agent so that the gaseous feedstream leaving the container contains little moisture.

A series of desiccant containers can be employed so that when the hydroscopic agent in one container becomes saturated or ineffective, it can be regenerated or replaced while another container continues to remove moisture from the gaseous feedstock.

In a further example, a humidity regulator can be employed that includes an automatic pressure-sensing regenerative dryer. Such a regenerative dryer can include two or more cylindrical towers containing molecular sieve materials. The towers can be cycled so that while one or more towers is drying the gaseous feedstock, other towers are being purged of accumulated moisture These towers can vent to the atmosphere through a solenoid valve activated by a timing motor.

In another example, a humidity regulator can include a membrane cartridge that has multiple membranes through which moisture, but not the desired gas components, can permeate and escape to the atmosphere or a collection system. Membranes for such cartridges are commercially available, and can take the form of hollow fibers so that desired gas components can pass through the interiors of the fibers while moisture removed from the feedstock gas is collected from the fiber exteriors.

The humidity regulator can include a combination of structural features such as a combination of refrigerants, condensation surfaces, heaters, desiccants, membranes, membrane cartridges, molecular sieves and the like. For example, the humidity regulator can pressurize and then dehumidify a gaseous feedstream using a desiccant, condensing surface, membrane, molecular sieve, or a combination thereof. The humidity regulator can, for example, heat or cool the gaseous feedstock and then reduce the water content of the feedstock using a desiccant, condensing surface, membrane, molecular sieve, or a combination thereof.

The gaseous feedstock can be subjected to more than one cycle of humidity regulation. For example, the gaseous feedstream can be subjected to one, two, three, four or more cycles of water content removal until the gaseous feedstream has a desirable low moisture content (e.g., less than about 1% water by volume or less than about 0.6% water by weight).

The humidity regulator can be configured to regulate humidity or water content in one type of gaseous feedstock. For example, the humidity regulator can be configured to regulate the water content of air, or air enriched with oxygen. The humidity regulator can also be configured to regulate the humidity of a combination of different gaseous feedstocks, for example, ammonia and methane feedstocks. A series of humidity regulators can be employed for different feedstocks. A series of humidity regulators can also be employed for one type of gaseous feedstock, for example, a feedstock that routinely has significant water content.

**Humidity Detectors**

The humidity of a gaseous feedstock or feedstream can be detected by any convenient method, for example, by using a detector capable of accurately detecting the water vapor content in a gaseous feedstock or feedstream. Such a detector can be used to modulate the activity of a humidity regulator operably linked thereto. Hence, the detector can, for example, activate the humidity regulator, increase the activity of the humidity regulator, stop the humidity regulator, decrease the activity of the humidity regulator, or otherwise adapt the humidity regulator function to provide a gaseous feedstream with consistent moisture content appropriate for reaction in an Andrussow process.

A variety of humidity detectors exist and can be employed. For example, the humidity detector can employ capacitive, coulometrical, electric, resistive, electrolytic, gravimetric, or piezoelectric methods of detecting humidity levels.

Electric hygrometers typically can measure the electrical resistance, capacitance, or impedance, for example, of a film of moisture-absorbing materials exposed to the gaseous feedstream. Some available electrolytic or piezoelectric hygrometers employ infrared spectroscopy or mass spectroscopy, which can be combined with vapor pressure measurements. While many commercially available electric hygrometers provide the relative humidity, such hygrometers can be adapted to provide the specific humidity of gaseous feedstreams.

The gravimetric method is generally accepted as being one of the more accurate humidity-measuring techniques. In this method a known quantity of gas is passed over a moisture-absorbing chemical such as phosphorus pentoxide, and the increase in weight is determined.

The humidity detector can provide an output signal of identifying a humidity level, for example, an absolute humidity. The humidity detector can have an absolute humidity set value to which the detected absolute humidity is compared. When the detected absolute humidity deviates from the absolute humidity set value, the humidity detector can signal the humidity regulator to initiate regulation. For example, when the detected absolute humidity is less than the absolute humidity set value, the humidity detector can signal the humidity regulator to terminate removal of water and signal a humidifying unit to supplement the water content of the feedstock. However, when the detected absolute humidity is more than the absolute humidity set value, the humidity detector can signal the humidity regulator to increase removal of water.

The absolute humidity signal and an absolute humidity set value can be converted from a relative humidity set value stored in the humidity detector. Conversion of relative humidity values to absolute humidity values can be through detection of other variables (e.g., temperature and/or pressure) and conversion by available mathematical formulae.

A regulating signal can be generated by a detector to initiate a power supply to one or more humidity regulator units. A regulating signal can also be generated by a detector to increase or decrease the speed or capacity of one or more humidity regulators. The absolute humidity of a feedstock is thus regulated to vary only slightly up or down from the absolute humidity set value. The absolute humidity measured and set values are compared and the humidity control signal is produced in accordance with the difference therebetween.

In addition to monitoring gaseous feedstream humidity, the humidity detector can include a thermometer, thermostat or similar temperature sensing element. The thermometer or temperature sensing element can be used to detect the temperature of gaseous feedstreams that may be subjected to humidity regulation. A thermostat element can be used to initiate heating or cooling if it is desirable to alter the temperature of a gaseous feedstream.

Temperature can also be measured and compared to a set value or set value range. When the measured temperature value of a gaseous feedstream falls outside a set value range, a temperature control signal can be produced to initiate heating or cooling of the gaseous feedstock or feedstream in accordance with the difference therebetween. The humidity control signal and the temperature control signal thus obtained are used to control the temperature and absolute humidity independently of each other in the ranges above and below select values or ranges.

### Examples of an Andrussow System

FIGs. 1-3 provide diagrams of illustrative systems for performing an Andrussow process.

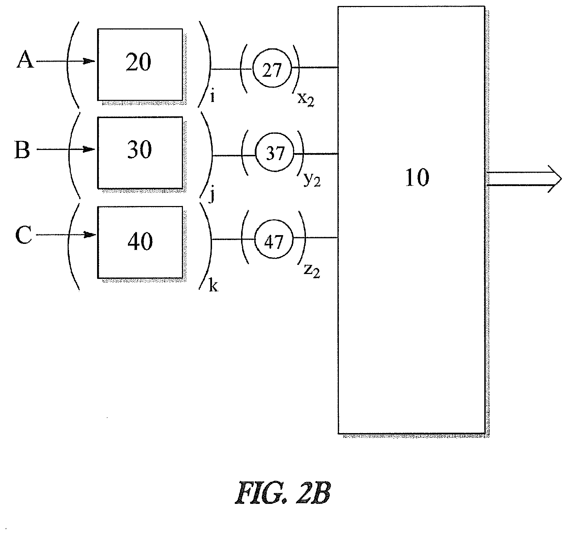

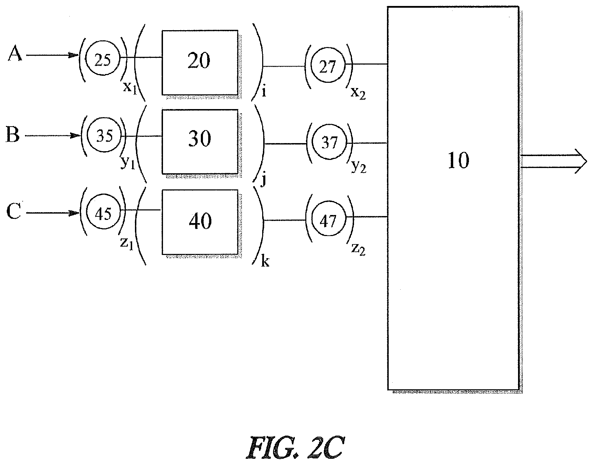

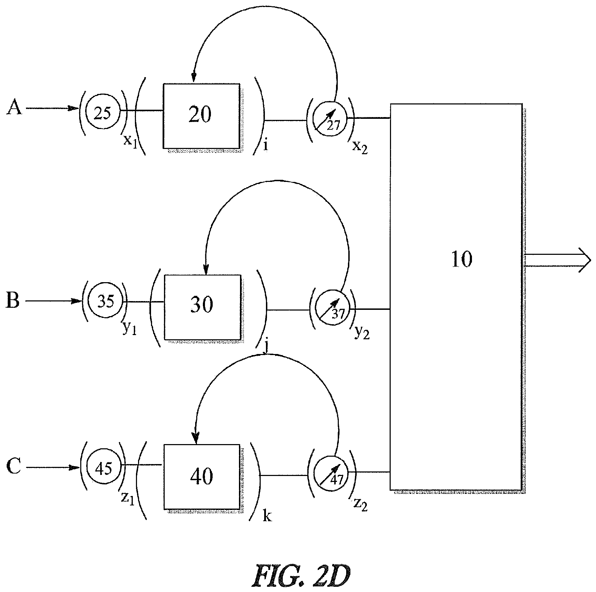

FIG. 1 and FIG. 2 are schematic diagrams illustrating types of Andrussow systems that include an Andrussow reactor **10,** where reactant gases such as ammonia, methane, and oxygen are converted in the presence of a platinum-containing catalyst into hydrogen cyanide and water. The system includes one or more humidity regulation units such as **20, 30** and **40** for regulating the water content of feedstock gases such as ammonia (A), methane (B), and air (C), respectively. Variables i, j and k are integers identifying the number of humidity regulators **20, 30** and **40,** respectively, where each of i, j and k can separately be an integer of 0 to 12. The i number of humidity regulators **20** can operate in parallel, in series or a combination thereof. Similarly, the j number of humidity regulators **30** can also operate in parallel, in series, or a combination thereof. In addition, the k number of humidity regulators **40** can also operate in parallel, in series or a combination thereof. Such parallel operation permits dehumidification to be performed by one or more dehumidifiers while other dehumidifiers are being regenerated. Operation of a series of dehumidifiers permits a feedstock that is partially treated, and may not yet have an acceptable (consistent) water content to be subjected to further treatment by another humidity regulator in the series.

The selection of the numerical value of each of i, j and k relates to the composition of reactant gases such as ammonia (A), methane (B), and air (C), respectively. For example, when pure ammonia is employed as a feedstock, i can be zero and the A feedstock is an ammonia feedstream with an acceptable water content. However, i can be also range from about 1 to about 6, or from about 1 to 3, even when an ammonia feedstock with an unacceptable or inconsistent water content is employed. Thus, the Andrussow system can readily be configured to employ an ammonia feedstock that has impurities that can include water. Similarly, for example, when pure methane (e.g., B) is employed, j can be zero. However, j can also range from about 1 to about 6, or from about 1 to 3, even when methane with an unacceptable or inconsistent water content is employed. The Andrussow system can readily be configured to employ a methane feedstock that has an unacceptably high or low water content. In addition, when pure oxygen is used (e.g., C), k can be zero. However, k can be also range from about 1 to about 6, or from about 1 to 3, even when air, or air enriched with oxygen, is employed that can have an unacceptable or inconsistent water content. The Andrussow system can thus be configured to employ air or an oxygen-containing feedstock that may have impurities that can include water.

In FIG. 2A - 2D, the Andrussow system can further include one or more humidity detectors **25, 27 35, 37, 45** and **47** that can be operably linked to one or more humidity regulators **20, 30** and **40,** and/or to the reactor **10.** In FIG. 2A, 2C and FIG. 2D, humidity detectors 25, 35 and **45** can detect the humidity of feedstock gases that will feed into the one or more humidity regulators **20, 30** and **40,** respectively. In FIG. 2B, 2C and 2D, such humidity detectors **27**, **37** and **47** can detect the humidity of feedstream gases that emerge from the one or more humidity regulators **20, 30** and **40,** respectively, before those feedstream gases feed into the reactor **10.** The variables $x_1$, $x_2$, $y_1$, $y_2$, $z_1$ and $z_2$ are integers identifying the number of humidity detectors **25, 27 35,37, 45** and **47,** respectively. Each of variables $x_1$, $x_2$, $y_1$, $y_2$, $z_1$ and $z_2$ can separately be an integer of 0 to 12. For example, if there are i humidity regulators **20,** the value of $x_1$ and $x_2$ can be the same or less than i; if there are j humidity regulators **30,** the value of $y_1$ and $y_2$ can be the same of less than j; and if there are k humidity regulators **40,** the value of $z_1$ and $z_2$ can be the same of less than k.

Each of humidity detectors **25, 27, 35, 37, 45** and **47** can provide an output signal identifying a humidity level, for example, an absolute humidity output signal. Each of the humidity detectors **25, 27, 35, 37, 45** and **47** can have a separate absolute humidity set value to which the detected absolute humidity is compared. For example, when the detected absolute humidity in one of feedstocks A, B or C is more than the absolute humidity set value, one or more of the humidity detectors **25, 35,** and/or **45** can signal any of humidity regulators **20, 30,** and **40** to regulate (modulate) the water content of a feedstock stream, for example, by initiating or increasing dehumidification. Similarly, when the detected absolute humidity of feedstock streams emerging from any of humidity regulators **20, 30,** and **40** is less than the absolute humidity set value, one or more of the humidity detectors **27, 37,** and/or **47** can signal humidity regulators **20, 30,** and **40** to further modulate the water content of the feedstock, for example, by initiating or increasing humidification of the feedstock.

FIG. 3 illustrates another Andrussow system where two feedstocks (e.g., ammonia-containing and methane-containing feedstocks) are merged and can pass through one or more humidity regulators **20** before emerging into the reactor **10.** In general, the oxygen (e.g., air or $O_2$-containing gas) feedstock is a separate feedstock that can be treated in humidity regulator **40.** The system shown in FIG. 3 can have any of the features shown in FIGs. 2A-2D, including humidity detectors, and i or k numbers of humidity regulators **20** or **40,** respectively.

The following non-limiting Examples illustrate some aspects of Andrussow processes.

## Example 1

This Example illustrates how the conversion of ammonia to HCN can vary depending upon the humidity of the air used as an oxygen-containing feedstream during an air Andrussow process.

An Andrussow process is performed using methane, ammonia, and air feedstreams fed into the reactor at a set feed rate. The reaction is conducted in the presence of a platinum-containing catalyst. A 10.2 cm (4 inch) internal diameter stainless steel reactor with ceramic insulation lining inside is used for pilot scale test. Forty sheets of 90 wt% Pt/10 wt% Rh 40 mesh gauze from Johnson Matthey (USA) are loaded as catalyst bed. Perforated alumina tile is used for catalyst sheet support. The total flow rate is set at 71.7 standard cubic meters per hour (2532 SCFH [standard cubic foot per hour]). In a simulated manufacturing sequence, three reactors are used in an Andrussow reaction facility to generate hydrogen cyanide from a reaction mixture of about 17 vol% methane, about 19 vol% ammonia, and about 64 vol% air in the presence of the platinum catalyst. The gaseous product stream from the reactors contains about 76 mol% $N_2$, 4 mol% hydrogen cyanide, about 1.5 mol% unreacted ammonia, about 8 mol% hydrogen, about 1.5 mol% CO, and about 8 mol% $H_2O$, with an approximately 40% overall yield of hydrogen cyanide based on $NH_3$ reacted (mole based).

The conversion of ammonia (Cn) to product is determined as the percentage of the moles of HCN produced relative to the moles of $NH_3$ fed into the reactor.

$$Cn = 100 * (HCN \text{ produced} / NH_3 \text{ fed})$$

The methane yield is similarly determined as the percentage of the moles of $CH_4$ converted to HCN.

$$Cc = 100 * (HCN \text{ produced} / CH_4 \text{ fed})$$

As shown in Table 2, the oxygen and nitrogen content of gases fed into the reactor varied somewhat with the humidity or water content of the oxygen containing feedstream (e.g., air).

**Table 2: Affect of Humidity Changes on Reactant Conversion to HCN**

| Gas Composition | Air (dry) V % | 50% humidity V% (at 30 °C) | 100% humidity V%(at 30 °C) |
|---|---|---|---|
| Nitrogen ($N_2$) | 78.084 | 76.511 | 75.004 |
| Oxygen ($O_2$) | 20.946 | 20.524 | 20.120 |
| Water | 0 | 2.0087 | 3.9383 |
| | **assumed ideal ratio** | **actual ratio** | **actual ratio** |
| $CH_4/O_2$ | 1.20 | 1.22 | 1.25 |
| $NH_3/O_2$ | 1.30 | 1.33 | 1.35 |
| $NH_3$ conversion (%) | 65 | 60 | 50 |
| $CH_4$ yield (%) | 72 | 68 | 62 |

Therefore, as the humidity increases at 30 °C, the conversion of both ammonia and methane into the HCN product is reduced. This relationship is also illustrated FIG. 4.

**Example 2**

This Example illustrates the problems of variable humidity in an air Andrussow process. Such problems include increased by-product formation and an increased need for equipment cleaning and/or replacement.

A 10.2 cm (4 inch) internal diameter stainless steel reactor with ceramic insulation lining inside is used for pilot scale test. Forty sheets of 90 wt% Pt/10 wt% Rh 40 mesh gauze from Johnson Matthey (USA) are loaded as catalyst bed. Perforated alumina tile is used for catalyst sheet support. The total flow rate is set at 71.7 standard cubic meters per hour (2532 SCFH [standard cubic foot per hour]). In a simulated manufacturing sequence, three reactors are used in an Andrussow reaction facility to generate hydrogen cyanide from a reaction mixture of about 17 vol% methane, about 19 vol% ammonia, and about 64 vol% air in the presence of the platinum catalyst. The gaseous product stream from the reactors contains about 76 mol% $N_2$, 4 mol% hydrogen cyanide, about 1.5 mol% unreacted ammonia, about 8 mol% hydrogen, about 1.5 mol% CO, and about 8 mol% $H_2O$, with an approximately 40% overall yield of hydrogen cyanide based on $NH_3$ reacted (mole based). The Andrussow process is performed for three months using methane, ammonia, and air feedstocks, such that the feed to the reactor included at a set feed rate and the reaction is conducted in the presence of a platinum-containing catalyst. No regulation of humidity levels in the feedstocks is performed.

The intake air feedstock typically has an atmospheric pressure of about 1 atmosphere. The intake air feedstock at night (2 am) has an average temperature over three month period of about 27 °C and an average relative humidity of about 95% (2.1% specific humidity). The average temperature of the intake air feedstock in the morning is about 30 °C and it has an average relative humidity of about 90% (2.4% specific humidity). However, by mid-afternoon, the average temperature of the air intake feedstock is about 38 °C and it has a relative humidity of about 60 % (2.5% specific humidity). Thus, the average percent water content of the air feedstock varied everyday throughout the day by about 0.4%.

The density of air at 30 °C is about 1.164 kg/m$^3$; thus, there is about 0.7 kg air per cubic meter in the total gas feed sent to the reactor. However, because the specific humidity of the air varies by about 0.4% throughout the day, the mass of air fed into the reactor varies by about 0.003 g per cubic meter throughout the day. This occurs, on average, every day during the three month period.

Previous studies have shown that the amount of HCN produced can change by 1-2% when the gas mixture is changed by as little as 0.003%. Hence, the presence of variable humidity in the air feedstock leads to substantially less production of HCN over the three month period.

After three months, the reactor is shut down. Carbon build-up is observed in lines leading out of the reactor and substantial damage to the catalyst is observed. The catalyst pack is replaced.

Example 3

This Example illustrates the benefits of using an air feedstream with consistent water content. Such benefits can include reduced by-product formation and reduced carbon build-up when air with consistent water content is employed as the oxygen-containing feedstream in an Andrussow process.

The Andrussow process can be performed as described in Example 2 except that the water content of the air feedstock is regulated to substantially constant levels of about 1 % specific humidity. Production of HCN over the three month period is at least about 0.5% higher than observed for Example 2.

After three months, the reactor is shut down. Substantially less carbon build-up is observed in lines leading out of the reactor and little or no damage to the catalyst is observed. The catalyst pack is not replaced.

The specific methods, devices and compositions described herein are representative of preferred embodiments and are exemplary and not intended as limitations on the scope of the invention, which is defined by the appended claims.

As used herein and in the appended claims, the singular forms "a," "an," and "the" include plural reference unless the context clearly dictates otherwise. Thus, for example, a reference to "a reactor" or "a humidity regulator" or "a feedstream" includes a plurality of such reactors, humidity regulators, or feedstreams (for example, a series of reactors, humidity regulators, or feedstreams), and so forth. In this document, the term "or" is used to refer to a nonexclusive or, such that "A or B" includes "A but not B," "B but not A," and "A and B," unless otherwise indicated.

**Claims**

1. A process for generating hydrogen cyanide comprising:

   a) regulating water content in at least one gaseous feedstock to generate one or more feedstreams selected from the group consisting of a methane consistent water content feedstream, an ammonia consistent water content feedstream, and an oxygen-containing consistent water content feedstream; and
   b) reacting a methane feedstream, an ammonia feedstream and an oxygen feedstream to thereby generate hydrogen cyanide,

wherein at least one of the methane feedstream, the ammonia feedstream or the oxygen feedstream is a consistent water content feedstream; and
wherein the consistent water content feedstream varies in water content by not more than 1% (wt/wt) from a set value.

2. The process of claim 1, wherein the consistent water content feedstream has less than 2.0% by volume water.

3. The process of claim 1 or claim 2, wherein water content in an ammonia feedstock or a methane feedstock is regulated.

4. The process of any of claims 1 to 3, wherein water content in an oxygen-containing feedstock is regulated; and preferably the oxygen-containing feedstock is air or air enriched with oxygen.

5. The process of any of claims 1 to 4, wherein the oxygen feedstream contains less than or equal to 80% nitrogen.

6. The process of any of claims 1 to 5, further comprising detecting humidity in at least one feedstock or in at least one feedstream.

7. The process of any of claims 1 to 6, further comprising detecting humidity in at least one feedstock to determine at least one feedstock humidity level, and comparing the at least one feedstock humidity level to a set value for humidity of the at least one feedstock.

8. A system comprising:

a) a reactor configured for reaction of methane, ammonia and oxygen in the presence of a platinum-containing catalyst; and
b) at least one humidity regulator operably linked to the reactor and configured to regulate water content in at least one gaseous feedstock to generate one or more feedstreams selected from the group consisting of a methane consistent water content feedstream, an ammonia consistent water content feedstream, and an oxygen-containing consistent water content feedstream;

wherein at least one of the methane feedstream, the ammonia feedstream or the oxygen feedstream is a consistent water content feedstream; and
wherein the at least one humidity regulator is configured to generate a consistent water content feedstream that varies in water content by not more than 1% (wt/wt) from a set value.

9. The system of claim 8, wherein the at least one humidity regulator is configured to generate a consistent water content feedstream that:

(a) has less than 2.0% by volume water; and/or
(b) has more than 0.001% by volume water.

10. The system of claims 8 or 9, wherein the at least one humidity regulator is configured to regulate water content in an ammonia feedstock or a methane feedstock.

11. The system of any of claims 8 to 10, wherein the at least one humidity regulator is configured to regulate water content in an oxygen-containing feedstock selected from the group consisting of air or air enriched with oxygen.

12. The system of any of claims 8 to 11, further comprising at least one feedstream heater to warm at least one feedstream before the feedstream enters the reactor.

13. The system of any of claims 8 to 12, wherein the system is configured to generate hydrogen cyanide (HCN).

**Patentansprüche**

1. Verfahren zur Erzeugung von Cyanwasserstoff, das Folgendes umfasst:

a) Regulieren des Wassergehalts in mindestens einem gasförmigen Einsatzstoff zur Erzeugung eines oder mehrerer Einsatzströme aus der Gruppe bestehend aus einem Methan-Einsatzstrom mit gleichbleibendem Wassergehalt, einem Ammoniak-Einsatzstrom mit gleichbleibendem Wassergehalt und einem sauerstoffhaltigen Einsatzstrom mit gleichbleibendem Wassergehalt; und

b) Umsetzen eines Methan-Einsatzstroms, eines Ammoniak-Einsatzstroms und eines Sauerstoff-Einsatzstroms zur Erzeugung von Cyanwasserstoff,

wobei es sich bei dem Methan-Einsatzstrom, dem Ammoniak-Einsatzstrom und/oder dem Sauerstoff-Einsatzstrom um einen Einsatzstrom mit gleichbleibendem Wassergehalt handelt; und
wobei der Wassergehalt des Einsatzstroms mit gleichbleibendem Wassergehalt um nicht mehr als 1 % (Gew./Gew.) von einem Sollwert abweicht.

2. Verfahren nach Anspruch 1, bei dem der Einsatzstrom mit gleichbleibendem Wassergehalt weniger als 2,0 Vol.-% Wasser aufweist.

3. Verfahren nach Anspruch 1 oder Anspruch 2, bei dem der Wassergehalt in einem Ammoniak-Einsatzstoff oder einem Methan-Einsatzstoff reguliert wird.

4. Verfahren nach einem der Ansprüche 1 bis 3, bei dem der Wassergehalt in einem sauerstoffhaltigen Einsatzstoff reguliert wird und es sich vorzugsweise bei dem sauerstoffhaltigen Einsatzstoff um Luft oder mit Sauerstoff angereicherte Luft handelt.

5. Verfahren nach einem der Ansprüche 1 bis 4, bei dem der Sauerstoff-Einsatzstrom weniger oder gleich 80 % Stickstoff enthält.

6. Verfahren nach einem der Ansprüche 1 bis 5, ferner umfassend das Nachweisen von Feuchtigkeit in mindestens einem Einsatzstoff oder in mindestens einem Einsatzstrom.

7. Verfahren nach einem der Ansprüche 1 bis 6, ferner umfassend das Nachweisen von Feuchtigkeit in mindestens einem Einsatzstoff zur Bestimmung mindestens eines Einsatzstoff-Feuchtigkeitsniveaus und das Vergleichen des mindestens einen Einsatzstoff-Feuchtigkeitsniveaus mit einem Sollwert für die Feuchtigkeit des mindestens einen Einsatzstoffs.

8. System, umfassend:

a) einen Reaktor, der für die Umsetzung von Methan, Ammoniak und Sauerstoff in Gegenwart eines platinhaltigen Katalysators ausgelegt ist; und
b) mindestens einen Feuchtigkeitsregulator, der mit dem Reaktor wirkverbunden ist und zur Regulierung des Wassergehalts in mindestens einem gasförmigen Einsatzstoff zur Erzeugung eines oder mehrerer Einsatzströme aus der Gruppe bestehend aus einem Methan-Einsatzstrom mit gleichbleibendem Wassergehalt, einem Ammoniak-Einsatzstrom mit gleichbleibendem Wassergehalt und einem sauerstoffhaltigen Einsatzstrom mit gleichbleibendem Wassergehalt ausgelegt ist;

wobei es sich bei dem Methan-Einsatzstrom, dem Ammoniak-Einsatzstrom und/oder dem Sauerstoff-Einsatzstrom um einen Einsatzstrom mit gleichbleibendem Wassergehalt handelt; und
wobei der mindestens eine Feuchtigkeitsregulator zur Erzeugung eines Einsatzstroms mit gleichbleibendem Wassergehalt, dessen Wassergehalt um nicht mehr als ein % (Gew./Gew.) von einem Sollwert abweicht, ausgelegt ist.

9. System nach Anspruch 8, wobei der mindestens eine Feuchtigkeitsregulator zur Erzeugung eines Einsatzstroms mit gleichbleibendem Wassergehalt, der

(a) mindestens 2,0 Vol.-% Wasser aufweist und/oder
(b) mehr als 0,001 Vol.-% Wasser aufweist, ausgelegt ist.

10. System nach Anspruch 8 oder 9, wobei der mindestens eine Feuchtigkeitsregulator zur Regulierung des Wassergehalts in einem Ammoniak-Einsatzstoff oder einem Methan-Einsatzstoff ausgelegt ist.

11. System nach einem der Ansprüche 8 bis 10, wobei der mindestens eine Feuchtigkeitsregulator zur Regulierung des Wassergehalts in einem sauerstoffhaltigen Einsatzstoff aus der Gruppe bestehend aus Luft oder mit Sauerstoff angereicherter Luft ausgelegt ist.

12. System nach einem der Ansprüche 8 bis 11, ferner umfassend mindestens einen Einsatzstrom-Erhitzer zum Erwärmen von mindestens einem Einsatzstrom vor dem Eintreten des Einsatzstroms in den Reaktor.

13. System nach einem der Ansprüche 8 bis 12, wobei das System zur Erzeugung von Cyanwasserstoff (HCN) ausgelegt ist.

**Revendications**

1. Procédé de génération de cyanure d'hydrogène comprenant :

a) la régulation de la teneur en eau dans au moins une matière première gazeuse pour générer un ou plusieurs flux d'alimentation choisis dans le groupe constitué d'un flux d'alimentation à teneur en eau constante de méthane, un flux d'alimentation à teneur en eau constante d'ammoniac, et un flux d'alimentation à teneur en eau constante contenant de l'oxygène ; et
b) la réaction d'un flux d'alimentation de méthane, un flux d'alimentation d'ammoniac et un flux d'alimentation d'oxygène de façon à générer du cyanure d'hydrogène,

dans lequel au moins l'un parmi le flux d'alimentation de méthane, le flux d'alimentation d'ammoniac ou le flux d'alimentation d'oxygène est un flux d'alimentation à teneur en eau constante ; et
dans lequel le flux d'alimentation à teneur en eau constante varie en termes de teneur en eau de pas plus de 1 % (poids/poids) par rapport à une valeur définie.

2. Procédé de la revendication 1, dans lequel le flux d'alimentation à teneur en eau constante contient moins de 2,0 % en volume eau.

3. Procédé de la revendication 1 ou la revendication 2, dans lequel la teneur en eau dans une matière première d'ammoniac ou une matière première de méthane est régulée.

4. Procédé de l'une quelconque des revendications 1 à 0.3, dans lequel la teneur en eau dans une matière première contenant de l'oxygène est régulée ; et, de préférence, la matière première contenant de l'oxygène est de l'air ou de l'air enrichi en oxygène.

5. Procédé de l'une quelconque des revendications 1 à 4, dans lequel le flux d'alimentation d'oxygène contient 80 % d'azote ou moins.

6. Procédé de l'une quelconque des revendications 1 à 5, comprenant en outre la détection d'humidité dans au moins une matière première ou dans au moins un flux d'alimentation.

7. Procédé de l'une quelconque des revendications 1 à 6, comprenant en outre la détection d'humidité dans au moins une matière première pour déterminer au moins un taux d'humidité de matière première, et la comparaison de l'au moins un taux d'humidité de matière première à une valeur définie pour l'humidité de l'au moins une matière première.

8. Système comprenant :

a) un réacteur configuré pour la réaction de méthane, d'ammoniac et d'oxygène en présence d'un catalyseur contenant du platine ; et
b) au moins un régulateur d'humidité fonctionnellement lié au réacteur et configuré pour réguler la teneur en eau dans au moins une matière première gazeuse pour générer un ou plusieurs flux d'alimentation choisis dans le groupe constitué d'un flux d'alimentation à teneur en eau constante de méthane, un flux d'alimentation à teneur en eau constante d'ammoniac, et un flux d'alimentation à teneur en eau constante contenant de l'oxygène ;

dans lequel au moins l'un du flux d'alimentation de méthane, du flux d'alimentation d'ammoniac ou du flux d'alimentation d'oxygène est un flux d'alimentation à teneur en eau constante ; et

dans lequel l'au moins un régulateur d'humidité est configuré pour générer un flux d'alimentation à teneur en eau constante qui varie en termes de teneur en eau de pas plus de 1 % (poids/poids) par rapport à une valeur définie.

9. Système de la revendication 8, dans lequel l'au moins un régulateur d'humidité est configuré pour générer un flux d'alimentation à teneur en eau constante qui :

   (a) contient moins de 2,0 % en volume d'eau ; et/ou
   (b) contient plus de 0,001 % en volume d'eau.

10. Système des revendications 8 ou 9, dans lequel l'au moins un régulateur d'humidité est configuré pour réguler la teneur en eau dans une matière première d'ammoniac ou une matière première de méthane.

11. Système de l'une quelconque des revendications 8 à 10, dans lequel l'au moins un régulateur d'humidité est configuré pour réguler la teneur en eau dans une matière première contenant de l'oxygène choisie dans le groupe constitué d'air ou d'air enrichi en oxygène.

12. Système de l'une quelconque des revendications 8 à 11, comprenant en outre au moins un dispositif de chauffage de flux d'alimentation pour réchauffer au moins un flux d'alimentation avant que le flux d'alimentation entre dans le réacteur.

13. Système de l'une quelconque des revendications 8 à 12, le système étant configuré pour générer du cyanure d'hydrogène (HCN) .

*FIG. 1*

*FIG. 2A*

*FIG. 2B*

*FIG. 2C*

21

*FIG. 2D*

$NH_3 + CH_4$ ⟶ [ 20 ]$_i$ ⟶

$O_2$ ⟶ [ 40 ]$_k$ ⟶

[ 10 ] ⟹

*FIG. 3*

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 1934838 A

- DE 549055

**Non-patent literature cited in the description**

- **ERIC. L. CRUMP.** Economic Impact Analysis For the Proposed Cyanide Manufacturing NESHAP. U.S. Environmental Protection Agency, Office of Air Quality Planning and Standards, May 2000
- **N.V. TRUSOV.** Effect of Sulfur Compounds and Higher Homologues of Methane on Hydrogen Cyanide Production by the Andrussow Method. *Rus. J. of Applied Chemistry,* 2001, vol. 74 (10), 1693-97

- Clean Development Mechanism Project Design Document Form (CDMPDD). Clean Development Mechanism (CDM) Executive Board, United Nations Framework Convention on Climate Change (UNFCCC), 28 July 2006
- **GARY R. MAXWELL et al.** Assuring process safety in the transfer of hydrogen cyanide manufacturing technology. *J. of Hazardous Materials,* 2007, vol. 142, 677-84
- Ullmann's Encyclopedia of Industrial Chemistry. VCH Verlagsgesellschaft, 1987, vol. 8, 161-162